# FASCICULE DE BREVET EUROPEEN

(11) **EP 1 228 970 B1**
(45) Date de publication et mention de la délivrance du brevet: **18.08.2004**
(21) Numéro de dépôt: 02290096.3
(22) Date de dépôt: 15.01.2002
(51) Int. Cl.: B65D 5/32

(54) **Boîte ouverte et son recouvrement, en carton**
Oben offene Kartonschachtel mit Kartonhülle
Open carton box with carton cover

(30) Priorité: 16.01.2001 FR 0100519
(43) Date de publication de la demande: 07.08.2002
(73) Titulaire: SMURFIT-SOCAR, F-94160 Saint-Mandé (FR)
(72) Inventeur: Meurant, Alain, 94440 Marolles en Brie (FR); Dixneuf, Claude, 94370 Sucy en Brie (FR)
(74) Mandataire: Jolly, Jean-Pierre

(56) Documents cités:
- GB-A- 2 299 565
- US-A- 3 301 391
- US-A- 4 471 870
- US-A- 5 555 982

## Description

L'invention concerne un ensemble et un procédé de conditionnement d'articles logés dans un corps en un matériau semi-rigide, tel que le carton ou le carton ondulé, ouvert à sa partie supérieure.

Il existe de très nombreux types de corps de conditionnement ouverts à leur partie supérieure, par exemple ceux désignés dans la technique sous l'appellation de "plateau" ou de "barquette".

Ils comportent habituellement une partie de fond de forme sensiblement rectangulaire et des parois articulées par des lignes de pliage sur cette partie de fond, suivant les côtés du rectangle, et dressées perpendiculairement à cette partie de fond. Les différentes parois sont assemblées entre elles et maintenues redressées par des moyens connus dans la technique.

Dans des conditionnements de ce type, certaines parois peuvent comporter à leurs extrémités des volets appliqués contre les parois contiguës. Des parois peuvent également être doublées par des panneaux rabattus vers le fond. D'autres, enfin, peuvent comporter aussi à leur partie supérieure des parties dites "trottoirs" s'étendant vers l'intérieur du conditionnement parallèlement au fond.

Par ailleurs, dans certains de ces conditionnements, la partie de fond n'a pas une forme exactement rectangulaire, mais a la forme d'un rectangle tronqué dans les coins par des segments de droite, par exemple à 45°, avec des parois articulées par des lignes de pliage suivant ces segments de droite, dressées perpendiculairement à la partie de fond, et réunissant les parois articulées suivant les côtés du rectangle.

C'est à toutes ces variantes et à d'autres corps de conditionnement ouverts à leur partie supérieure que s'intéresse la présente invention et elle vise à protéger et à maintenir fermement dans le corps du conditionnement des articles qui y sont logés et qui comportent une surface supérieure plane parallèle au fond, les différentes surfaces étant toutes déposées dans le même plan.

On a déjà proposé d'utiliser dans ce but un film de matière plastique thermorétractable, fermant le conditionnement plein à sa partie supérieure et appliqué contre ses parois latérales. Ce mode de conditionnement, qui connaît une très grande vogue, présente cependant deux inconvénients :
- d'une part, pour permettre l'accès sur les lieux de vente aux articles conditionnés, il est nécessaire d'éliminer le film de matière plastique en le déchirant, et les employés utilisent généralement dans ce but un outil coupant, avec lequel ils risquent de se blesser ;
- d'autre part, lorsque l'on met au rebut le conditionnement et le film plastique, les règlements applicables à la récupération et au recyclage des déchets imposent d'utiliser deux bacs de stockage différents.

Pour remédier à ces inconvénients, il a donc été proposé plus récemment de gainer le conditionnement empli d'articles avec un fourreau de papier, dont les dimensions sont telles qu'il enserre le conditionnement plein.

Ce mode de conditionnement se révèle satisfaisant, mais il est coûteux, en raison de la grande quantité de papier utilisé et de la nécessité de constituer un fourreau avec ce papier.

On a aussi proposé (voir US-A-5 555 982 ou GB-A-2 299 565), dans le cas où le corps de conditionnement comporte, articulées à la partie supérieure de parois parallèles opposées, des parties ou "trottoirs" faisant saillie parallèlement au fond, de coiffer ce corps avec une feuille de papier repliée de manière à présenter une section en U, cette feuille prenant appui par la base du U sur ces trottoirs, sur lesquels elle est éventuellement collée, tandis que les bandes du U sont collées sur deux autres parois parallèles.

Avec un tel mode de conditionnement, la feuille de papier ne prend pas appui directement sur les articles conditionnés, qui ne sont donc pas maintenus fermement en position, puisqu'ils sont séparés de cette feuille par un intervalle correspondant à l'épaisseur du carton ou du carton ondulé dont sont constitués les trottoirs, et parfois bien supérieure, compte tenu des tolérances existant dans la fabrication des conditionnements en carton ou en carton ondulé.

GB-A-2 299 565 décrit par ailleurs un procédé discontinu pour la réalisation d'un conditionnement de ce type, dans lequel la feuille de papier est pliée en U et rendue solidaire du corps du conditionnement à des postes fixes successifs.

La présente invention propose elle aussi d'utiliser une feuille de papier pour coiffer un corps de conditionnement ouvert à sa partie supérieure, mais sans réaliser de fourreau, en utilisant une quantité moindre de papier et en faisant prendre appui à la feuille sur la surface supérieure des objets conditionnés.

A cet effet, l'invention a pour premier objet un ensemble de conditionnement d'articles logés dans un corps en un matériau semi-rigide tel que le carton ou le carton ondulé, ce corps étant ouvert à sa partie supérieure et comportant une partie de fond ayant sensiblement la forme d'un rectangle, sur laquelle sont articulées par deux premières lignes de pliage, suivant deux côtés parallèles du rectangle, deux premières parois et, éventuellement, par deux secondes lignes de pliage, suivant deux autres côtés parallèles du rectangle, deux secondes parois, les premières et les éventuelles secondes parois étant dressées perpendiculairement au fond et pouvant être éventuellement verrouillées dans cette position et assemblées entre elles, tandis que les articles logés dans le corps ont tous la même hauteur et comprennent une surface supérieure parallèle à la partie de fond, cet ensemble comprenant un élément en papier, présentant une section transversale en U suivant un plan de coupe perpendiculaire à deux parois parallèles du corps, les parties latérales de cet élément en papier correspondant aux deux branches du U prenant appui sur la face externe desdites deux parois parallèles du corps et étant collées contre cette face, cet ensemble de conditionnement étant caractérisé en ce que l'élément de papier est étiré sous tension, de manière à être allongé, entre lesdites deux parois latérales et prend appui directement par un panneau correspondant à la base du U contre la face supérieure des articles conditionnés.

Comme on le verra ci-après, le papier est mis sous tension par étirement lors de sa mise en place sur le corps et de son collage sur les parois latérales parallèles de ce corps et, du fait de l'élasticité inhérente au papier, une pression est ainsi exercée sur la face supérieure des articles conditionnés, qui sont donc maintenus très fermement en position dans le corps.

L'invention a également pour objet un procédé de conditionnement d'articles logés dans un corps en un matériau semi-rigide tel que le carton ou le carton ondulé, ce corps étant ouvert à sa partie supérieure et comportant une partie de fond ayant sensiblement la forme d'un rectangle, sur laquelle sont articulées par deux premières lignes de pliage, suivant deux côtés parallèles du rectangle, deux premières parois et, éventuellement, par deux secondes lignes de pliage, suivant deux autres côtés parallèles du rectangle, deux secondes parois, les premières et les éventuelles secondes parois étant dressées perpendiculairement au fond et pouvant être éventuellement verrouillées dans cette position et assemblées entre elles, tandis que les articles logés dans le corps ont tous la même hauteur et comprennent une surface supérieure parallèle à la partie de fond, procédé selon lequel on coiffe les articles préalablement logés dans le corps avec un élément en papier ayant une section transversale en U suivant un plan de coupe perpendiculaire à deux des parois parallèles et l'on colle les parties latérales de cet élément de papier correspondant aux deux branches du U contre la face desdites deux parois du corps, ce procédé étant caractérisé en ce que, préalablement à la phase de collage dudit élément de papier contre les parois parallèles du corps ou au cours de cette phase de collage, on amène cet élément de papier à prendre appui directement contre la face supérieure des articles conditionnés, en exerçant simultanément sur cet élément une tension apte à l'étirer entre lesdites deux parois, cette tension étant maintenue pendant la phase de collage.

Comme on le verra plus en détail ci-après, les articles logés dans le conditionnement peuvent avoir une hauteur supérieure, égale ou inférieure à celle des parois les plus élevées du corps du conditionnement, ce qui représente un avantage appréciable par rapport à la technique rappelée ci-dessus utilisant un fourreau de papier, où le fourreau ne peut prendre appui sur la face supérieure des articles conditionnés que s'ils ont une hauteur au moins égale à celle des parois les plus élevées du corps, ou aux réalisations dans lesquelles le papier prend appui sur des trottoirs du conditionnement.

Par ailleurs, les articles ainsi maintenus en position ne risquent pas de sortir accidentellement du corps du conditionnement pendant les opérations ultérieures de manutention et de transport.

Dans une forme de mise en oeuvre préférée du procédé selon l'invention, celui-ci est mis en oeuvre en continu, pendant le transfert sur un convoyeur continu du corps du conditionnement préalablement empli des objets conditionnés, sans interruption du mouvement de ce convoyeur.

Les objets conditionnés peuvent avoir des formes variées, par exemple être parallélépipédiques, oblongs, cylindriques ou avoir une forme de bouteille ou de pot pour yaourt.

Au moins une découpe ou une amorce de découpe peut avantageusement être ménagée dans les parois contre lesquelles prennent appui et sont collées sous tension les parties latérales de l'élément de papier, juste au-dessous de ces parties, de manière à pouvoir y engager un doigt pour soulever et désolidariser chaque partie latérale de l'élément en papier de la paroi du corps associé.

On notera que le panneau de base de l'élément en papier à section en U et les parties latérales sont simplement articulées entre eux par deux lignes de pliage parallèles et que cet élément est donc particulièrement facile à réaliser.

On notera également que, si les objets conditionnés dans le corps ont une hauteur au moins égale à celle de ces objets, l'élément en papier peut être disposé indifféremment, suivant l'effet recherché, avec ses lignes de pliage disposées suivant la longueur du corps du conditionnement ou suivant la largeur de celui-ci, à condition bien entendu que les dimensions de cet élément soient adaptées à l'utilisation envisagée.

D'autres caractéristiques et avantages de l'invention apparaîtront dans la description détaillée qui va suivre de diverses formes de mise en oeuvre de celle-ci. Dans cette description, on se référera aux dessins schématiques annexés sur lesquels :

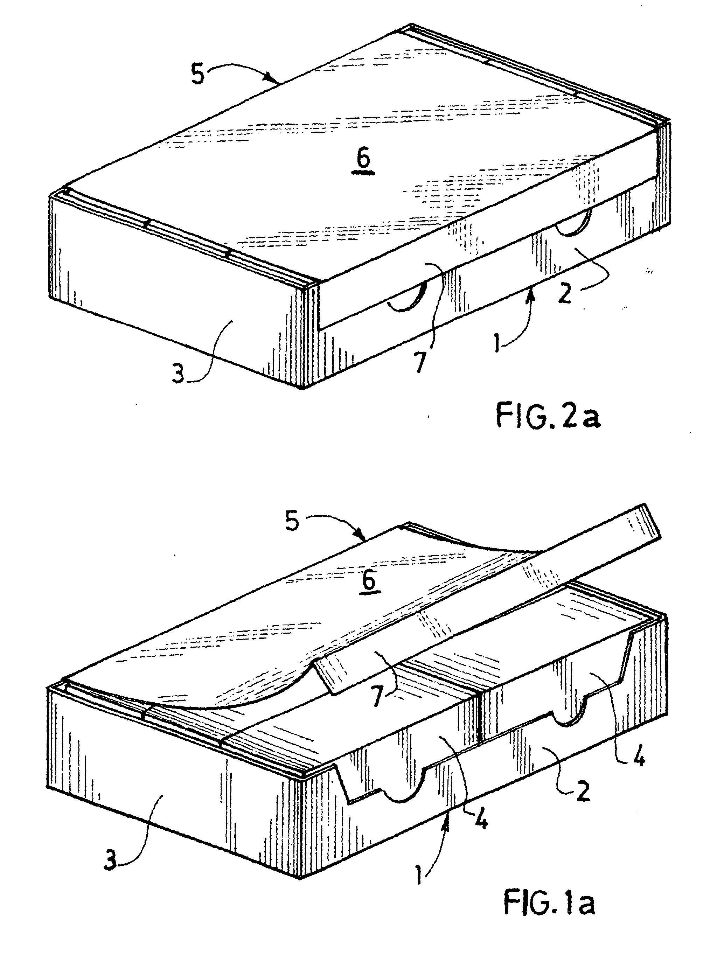

Les figures 1a et 2a sont des vues en perspective illustrant une première forme de mise en oeuvre de l'ensemble de conditionnement selon l'invention, dans laquelle le corps en matériau semi-rigide comprend quatre parois latérales, l'élément de papier étant représenté respectivement avec une partie latérale soulevée et avec cette même partie appliquée et collée sous tension contre une paroi de plus petite hauteur du corps, les parois les plus hautes de celui-ci ayant la même hauteur que la surface supérieure des articles conditionnés ;

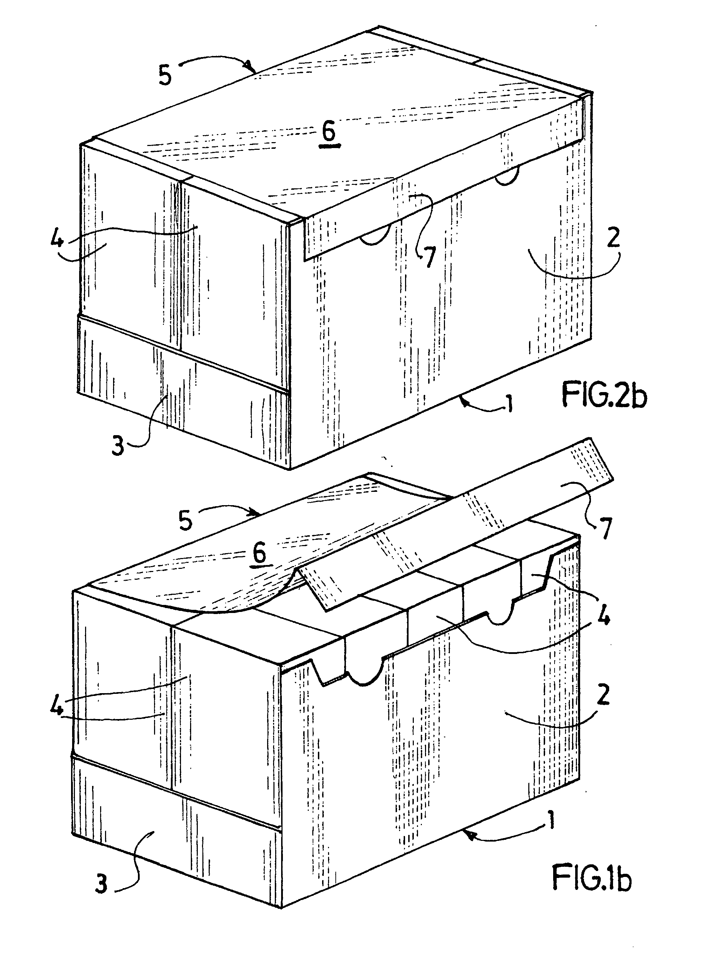

Les figures 1b et 2b sont des vues analogues aux figures 1a et 2a d'une seconde forme de mise en oeuvre de l'invention, dans laquelle le corps en un matériau semi-rigide comporte toujours quatre parois, mais où les parties latérales de l'élément de papier sont appliquées contre les parois de plus grande hauteur de ce corps, ces parois ayant la même hauteur que la surface supérieure des articles conditionnés ;

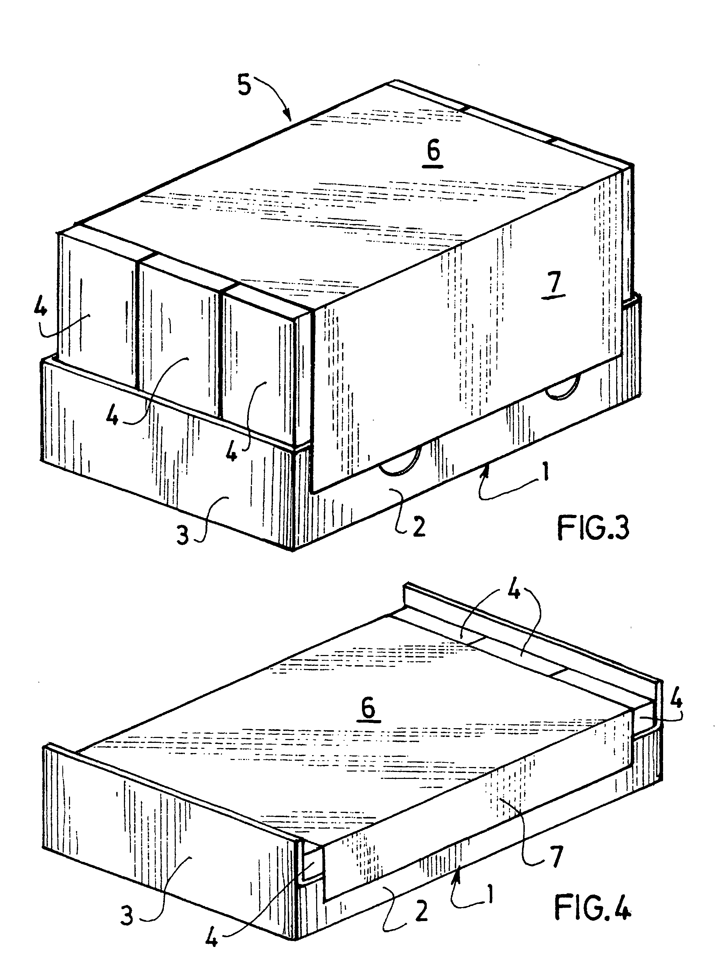

Les figures 3 et 4 sont des vues analogues à la figure 1, dans le cas où les parois les plus élevées du corps du conditionnement sont respectivement plus hautes et plus basses que la surface supérieure des articles conditionnés ;

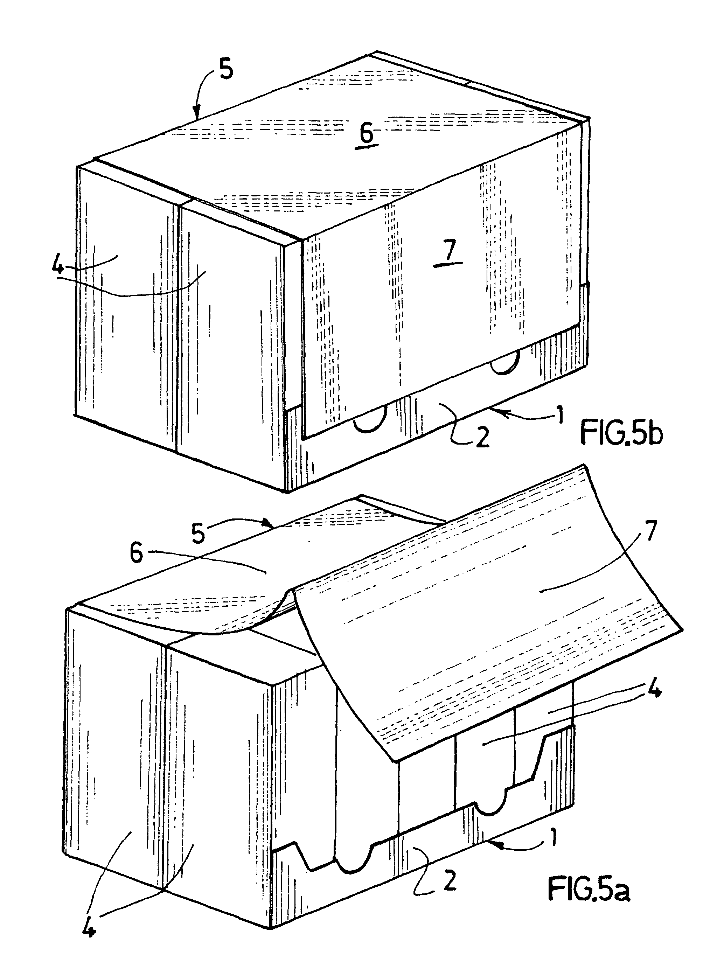

Les figures 5a et 5b sont des vues analogues aux figures 1a et 1b d'une autre forme de mise en oeuvre de l'ensemble, dans laquelle le corps en un matériau semi-rigide comporte seulement deux parois latérales parallèles, contre lesquelles sont appliquées et collées les parties latérales de l'élément en papier ;

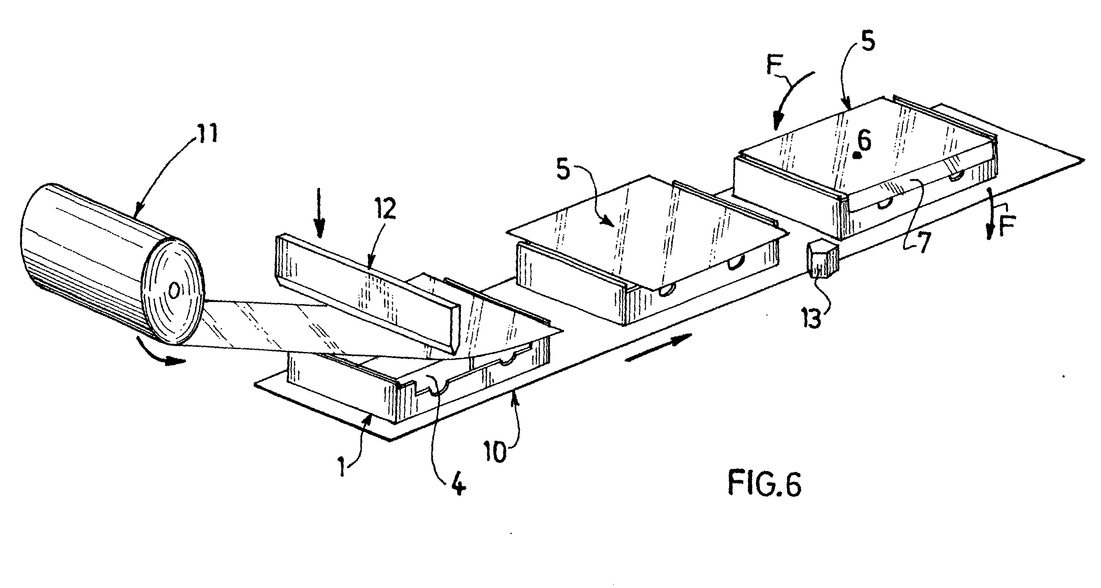

La figure 6 est une vue schématique illustrant la possibilité de mettre en oeuvre en continu le procédé conforme à l'invention.

Sur toutes les figures, les mêmes parties et les articles conditionnés sont désignés par les mêmes chiffres de référence.

L'ensemble de conditionnement représenté sur les figures 1a, 2a, 1b, 2b, 3 et 4 comporte un corps 1 en carton ondulé, en forme de barquette ouverte à sa partie supérieure, qui comprend une partie de fond rectangulaire, à laquelle sont attenantes par des lignes de pliage deux parois longitudinales 2, parallèles entre elles et perpendiculaires au fond, et deux parois transversales 3, également parallèles entre elles et perpendiculaires au fond. Les parois 2 et 3 sont perpendiculaires entre elles et peuvent être assemblées entre elles par tout moyen connu dans la technique, non représenté sur les dessins.

Dans le corps 1 sont logés des articles 4, ici des boîtes en forme de parallélépipède rectangle, mais qui pourraient aussi bien être des objets cylindriques disposés perpendiculairement au fond, ou encore des bouteilles, qui ont tous la même hauteur par rapport au fond du corps 1 et comportent une face supérieure parallèle à ce fond.

Les articles 4 peuvent avoir, perpendiculairement au fond du corps 1, une dimension égale à la hauteur des parois 2 ou 3 les plus élevées (figures 1a - 2a, 1b - 2b), une dimension supérieure à cette hauteur (figure 3) ou une dimension inférieure à celle-ci (figure 4).

Les articles 4 sont maintenus en position dans le corps 1 et protégés de l'extérieur par un élément 5 en papier, qui, en position d'assemblage avec le corps 1, en coupe par un plan perpendiculaire à deux parois parallèles de ce corps, ici les parois 2, présente une section transversale en U.

Un panneau 6 de l'élément 5 correspondant à la base du U prend appui sur la face supérieure des articles 4 et deux ailes latérales 7, articulées par des lignes de pliage parallèles sur le panneau 6, sont appliquées contre la face externe des parois 2 et collées sous tension contre celle-ci, de manière que le panneau 6 exerce une pression sur la face supérieure des articles 4. L'élément de papier 5 les maintient ainsi fermement en position, du fait de l'élasticité du papier et de l'allongement qu'il a connu par étirement lors de sa fixation sur les parois 2.

L'élasticité du papier est certes faible, mais l'allongement du papier peut atteindre quelques parties pour cent, ce qui permet à l'élément 5 de solliciter très fermement les articles 4 en direction du fond du corps 1.

Dans la réalisation des figures 5a et 5b, où les organes déjà décrits sont à nouveau désignés par les mêmes références, le corps 1 comporte seulement deux parois latérales 2, articulées par des lignes de pliage sur la partie de fond rectangulaire, suivant deux côtés parallèles de celle-ci. Sur ces parois, dressées perpendiculairement à la partie de fond et de hauteur égale à celle des articles conditionnés, sont appliquées et collées sous tension les parties latérales 7 de l'élément 5 en papier à section en U qui maintient à lui seul en position les parois 2 et les articles 4.

Dans toutes ces réalisations, il est clair que le mode de conditionnement selon l'invention convient aussi bien à des objets de même hauteur ou plus ou moins hauts que les parois les plus élevées du corps du conditionnement, et qu'il maintient ces objets en position d'une matière beaucoup plus sûre et fiable que dans les conditionnements antérieurs évoqués ci-dessus.

La mise en place sous tension de l'élément du papier 5 à section en U en appui sur la face supérieure des articles 4 et le collage simultané ou ultérieur, mais toujours sous tension, des ailes 7 de cet élément 5 contre les parois 4 du corps 1 peuvent être réalisés à poste (s) fixe (s).

Comme illustré par la figure 6, toutefois, dans une forme de mise en oeuvre préférée du procédé selon l'invention, ces opérations sont effectuées durant le transport du corps 1 préalablement empli des articles 4 par un convoyeur continu 10, sans interrompre le mouvement de ce convoyeur.

L'élément de papier 5 déroulé à partir d'un rouleau 11 disposé en amont du convoyeur 10 est coupé à la longueur désirée par un massicot 12 et appliqué sur la face supérieure des articles 4 de la caisse 1.

Les parois latérales 2 du corps 1 sont simultanément enduites d'un filet de colle par l'encolleuse 13, puis l'élément 5 est étiré transversalement suivant les flèches F tandis que ses ailes 7 sont rabattues simultanément, toujours sous tension, contre les parois 2, pour en être rendues rigidement solidaires, sous pression latérale, à l'aide de la colle précédemment déposée.

Il est ainsi possible de traiter à grande cadence les corps 1 de conditionnement préalablement emplis des articles 4 afin de maintenir fermement ces derniers en position, sans risque de chute accidentelle en dehors des corps 1, au cours des opérations de transport et de manutention sans précautions spéciales que ceux-ci connaîtront ultérieurement.

## Revendications

1. Ensemble de conditionnement d'articles (4) logés dans un corps (1) en un matériau semi-rigide tel que le carton ou le carton ondulé, ce corps étant ouvert à sa partie supérieure et comportant une partie de fond ayant sensiblement la forme d'un rectangle, sur laquelle sont articulées par deux premières lignes de pliage, suivant deux côtés parallèles du rectangle, deux premières parois (2) et, éventuellement, par deux secondes lignes de pliage, suivant deux autres côtés parallèles du rectangle, deux secondes parois (3), les premières et les éventuelles secondes parois (2, 3) étant dressées perpendiculairement au fond et pouvant être éventuellement verrouillées dans cette position et assemblées entre elles, tandis que les articles (4) logés dans le corps (1) ont tous la même hauteur et comprennent une surface supérieure parallèle à la partie de fond, cet ensemble comprenant un élément (5) en papier, présentant une section transversale en U suivant un plan de coupe perpendiculaire à deux parois parallèles (2 ou 3) du corps (1) et les parties latérales (7) de cet élément de papier (5) correspondant aux deux branches du U prenant appui sur la face externe de ces deux parois parallèles (2 ou 3) du corps (1) et étant collées contre cette face, cet ensemble étant **caractérisé en ce que** l'élément de papier (5) est étiré sous tension, de manière à être allongé, entre les deux parois parallèles (2, 3) du corps (1) et prend directement appui par un panneau (6) correspondant à la base du U contre la face supérieure des articles (4) conditionnés.

2. Ensemble selon la revendication 1, **caractérisé en ce que** le panneau (6) et les parties latérales (7) de l'élément (5) en papier sont articulés entre eux par des lignes de pliage qui, en position montée de l'ensemble, sont parallèles à deux parois opposées (2 ou 3), longitudinales ou transversales, du corps (1).

3. Ensemble selon l'une des revendications 1 et 2, **caractérisé en ce que** les parois (2 ou 3) du corps (1) contre la face externe desquelles sont appliquées et collées sous tension les parties latérales (7) de l'élément de papier comportent, immédiatement au-dessous de ces parties (7), au moins une découpe ou une amorce de découpe, dans laquelle il est possible d'engager un doigt pour soulever et désolidariser chaque partie (7) de la paroi (2 ou 3) associée.

4. Procédé de conditionnement d'articles (4) logés dans un corps (1) en un matériau semi-rigide tel que le carton ou le carton ondulé ce corps étant ouvert à sa partie supérieure et comportant une partie de fond ayant sensiblement la forme d'un rectangle, sur laquelle sont articulées par deux premières lignes de pliage, suivant deux côtés parallèles du rectangle, deux premières parois (2) et, éventuellement, par deux secondes lignes de pliage, suivant deux autres côtés parallèles du rectangle, deux secondes parois (3), les premières et les éventuelles secondes parois (2, 3) étant redressées perpendiculairement au fond et pouvant être éventuellement verrouillées dans cette position et assemblées entre elles, tandis que les articles (4) logés dans le corps (1) ont tous la même hauteur et comprennent une surface supérieure parallèle à la partie de fond, procédé selon lequel on coiffe les articles (4) préalablement logés dans le corps (1) avec un élément (5) en papier ayant une section transversale en U suivant un plan de coupe perpendiculaire à deux parois parallèles (2 ou 3) du corps (1), ce procédé étant **caractérisé en ce que**, préalablement à la phase de collage dudit élément (6) de papier contre les parois parallèles (2, 3) du corps, on amène cet élément (6) à prendre appui directement contre la face supérieure des articles (4) conditionnés, en exerçant simultanément sur cet élément (6) une tension apte à l'étirer entre lesdites deux parois (2, 3) du corps (1), cette tension étant maintenue pendant la phase de collage.

## Patentansprüche

1. Einheit zum Verpacken von Artikeln (4), die in einem Hauptteil (1) aus einem halbstarren Material wie zum Beispiel Pappe oder Wellpappe untergebracht sind, wobei das Hauptteil oben offen ist und ein Bodenteil umfasst, das weitgehend die Form eines Rechtecks aufweist und an das über zwei erste Falzlinien entlang zwei Parallelseiten des Rechtecks zwei erste Wandungen (2) und ggf. über zwei zweite Falzlinien entlang zwei anderen Parallelseiten des Vierecks zwei zweite Wandungen (3) angelenkt sind, wobei die ersten und die ggf. ausgebildeten zweiten Wandungen (2, 3) senkrecht zum Boden ausgerichtet sind und ggf. in dieser Position verriegelt und miteinander verbunden werden können, während die im Hauptteil (1) untergebrachten Artikel (4) alle die gleiche Höhe haben und eine Oberfläche parallel zum Bodenteil aufweisen, wobei die Einheit ein Papierelement (5) umfasst, das in einer Schnittebene senkrecht zu den beiden parallelen Wandungen (2 oder 3) des Hauptteils (1) einen U-förmigen Querschnitt besitzt und wobei die seitlichen Teile (7) dieses Papierelements (5) entsprechend den beiden Schenkeln des U-Profils auf der Außenfläche dieser beiden parallelen Wandungen (2 oder 3) des Hauptteils (1) aufliegen und gegen diese Fläche anliegend verklebt sind,
**dadurch gekennzeichnet, dass** das Papierelement (5) zwecks Streckung zwischen den beiden parallelen Wandungen (2, 3) des Hauptteils (1) unter Spannung gehalten wird und direkt über eine dem Boden des U-Profils entsprechende Platte (6) gegen die Oberseite der verpackten Artikel (4) anliegt.

2. Einheit nach Anspruch 1, **dadurch gekennzeichnet, dass** die Platte (6) und die seitlichen Teile (7) des Papierelements (5) untereinander über Falzlinien angelenkt sind, die im montierten Zustand der Einheit parallel zu zwei gegenüber-liegenden Wandungen (2 oder 3) auf den Längsoder Querseiten des Hauptteils (1) verlaufen.

3. Einheit nach einem der Ansprüche 1 und 2, **dadurch gekennzeichnet, dass** die Wandungen (2 oder 3) des Hauptteils (1), gegen deren Außenseite die seitlichen Teile (7) des Papierelements unter Spannung anliegen und verklebt sind, unmittelbar unterhalb dieser Teile (7) mindestens einen Ausschnitt oder Anriss umfassen, in den mit einem Finger eingegriffen werden kann, um jedes Teil (7) der entsprechenden Wandung (2 oder 3) anzuheben und zu lösen.

4. Verfahren zum Verpacken von Artikeln (4), die in einem Hauptteil (1) aus einem halbstarren Material wie zum Beispiel Pappe oder Wellpappe untergebracht sind, wobei das Hauptteil oben offen ist und ein Bodenteil umfasst, das weitgehend die Form eines Rechtecks aufweist und an das über zwei erste Falzlinien entlang zwei Parallelseiten des Rechtecks zwei erste Wandungen (2) und ggf. über zwei zweite Falzlinien entlang den anderen Parallelseiten des Vierecks zwei zweite Wandungen (3) angelenkt sind, wobei die ersten und die ggf. ausgebildeten zweiten Wandungen (2, 3) senkrecht zum Boden ausgerichtet sind und ggf. in dieser Position verriegelt und miteinander verbunden werden können, während die im Hauptteil (1) untergebrachten Artikel (4) alle die gleiche Höhe haben und eine Oberseite parallel zum Bodenteil aufweisen, wobei verfahrensgemäß die zuvor in das Hauptteil (1) eingesetzten Artikel (4) mit einem Papierelement (5) von U-förmigem Querschnitt in einer Schnittebene senkrecht zu zwei parallelen Wandungen (2 oder 3) des Hauptteils (1) abgedeckt werden, **dadurch gekennzeichnet, dass** vor dem Verkleben des Papierelements (6) gegen die parallelen Wandungen (2, 3) des Hauptteils dieses Element (6) direkt gegen die Oberseite der verpackten Artikel (4) aufliegt, wobei gleichzeitig diesem Element (6) eine Spannung beaufschlagt wird, um es zwischen die beiden Wandungen (2, 3) des Hauptteils (1) zu ziehen, und wobei diese Spannung während des Verklebens aufrechterhalten wird.

## Claims

1. A packaging unit for articles (4) housed in a body (1) made of a semirigid material, such as cardboard or corrugated cardboard, said body being open on its upper portion and comprising a base portion of substantially rectangular shape, to which are articulated by two first folding lines, along two parallel sides of the rectangle, two first walls (2) and, optionally, by two second folding lines, along two other parallel sides of the rectangle, two second walls (3), the first and the optional second walls (2,3) being aligned perpendicularly to the base and being able, optionally, to be locked in this position and joined together, whereas the articles (4) housed in the body (1) are all of the same height and comprise an upper surface parallel to the base portion, said unit comprising a paper element (5) of U-shaped cross-section along a sectional plane perpendicular to two parallel walls (2 or 3) of the body (1) and the side portions (7) of this paper element (5) corresponding to the two arms of the U bearing on the outer surface of these parallel walls (2 or 3) of the body (1) and being glued against this surface, said unit being **characterised in that** the paper element (5) is drawn under tension, so as to be extended, between the two parallel walls (2,3) of the body (1) and bears directly with a panel (6) corresponding to the base of the U against the upper surface of the packaged articles (4).

2. A unit according to claim 1, **characterised in that** the panel (6) and the side portions (7) of the paper element (5) are articulated to one another by folding lines which, in the assembled condition of the unit, are parallel to two opposite, longitudinal or transverse, walls (2 or 3) of the body (1).

3. A unit according to either one of claims 1 and 2, **characterised in that** the walls (2 or 3) of the body (1), against the outer surface of which are applied and glued under tension the side portions (7) of the paper element, comprise immediately below these portions (7), at least one cut-out or the start of a cut-out, into which a finger can be engaged to lift and detach each portion (7) from the associated wall (2 or 3).

4. A method of packaging articles (4) housed in a body (1) made of a semirigid material, such as cardboard or corrugated cardboard, said body being open on its upper portion and comprising a base portion of substantially rectangular shape, to which are articulated by two first folding lines, along two parallel sides of the rectangle, two first walls (2) and, optionally, by two second folding lines, along two other parallel sides of the rectangle, two second walls (3), the first and the optional second walls (2,3) being aligned perpendicularly to the base and being able, optionally, to be locked in this position and joined together, whereas the articles (4) housed in the body (1) are all of the same height and comprise an upper surface parallel to the base portion, a method according to which the articles (4) previously housed in the body (1) are covered (1) with a paper element (5) of U-shaped cross-section along a sectional plane perpendicular to two parallel walls (2 or 3) of the body (1), said method being **characterised in that**, prior to the gluing stage of said paper element (6) against the parallel walls (2,3) of the body, said element (6) is brought to bear directly against the upper surface of the packaged articles (4) by exerting simultaneously on this element (6) a tension suitable to stretch it between said two walls (2,3) of the body (1), said tension being maintained during the gluing stage.
